# FASCICULE DE BREVET EUROPEEN

(11) **EP 1 874 592 B1**
(45) Date de publication et mention de la délivrance du brevet: **02.05.2012**
(21) Numéro de dépôt: 06726270.9
(22) Date de dépôt: 23.03.2006
(51) Int. Cl.: B60R 19/56

(54) **STRUCTURE DE L'AVANT D'UN VEHICULE AUTOMOBILE**
FRONTSTRUKTUR FÜR EIN KRAFTFAHRZEUG
FRONT STRUCTURE OF A MOTOR VEHICLE

(30) Priorité: 20.04.2005 FR 0503939
(43) Date de publication de la demande: 09.01.2008
(73) Titulaire: Renault s.a.s., 92100 Boulogne Billancourt (FR)
(72) Inventeur: BROSSE, Olivier, F-92500 Rueil Malmaison (FR); VILLAIN, Christophe, F-77680 Roissy en Brie (FR)
(74) Mandataire: Rougemont, Bernard
(86) Numéro de dépôt international: PCT/FR2006/050254
(87) Numéro de publication internationale: WO 2006/111670

(56) Documents cités:
- WO-A-98/41423
- DE-C1- 10 144 212
- US-A1- 2004 217 604
- US-B1- 6 382 709

## Description

La présente invention concerne la structure de l'avant d'un véhicule automobile permettant d'absorber des chocs jusqu'à une vitesse de 16 km/h sans nécessiter des coûts élevés de réparation de ladite structure.

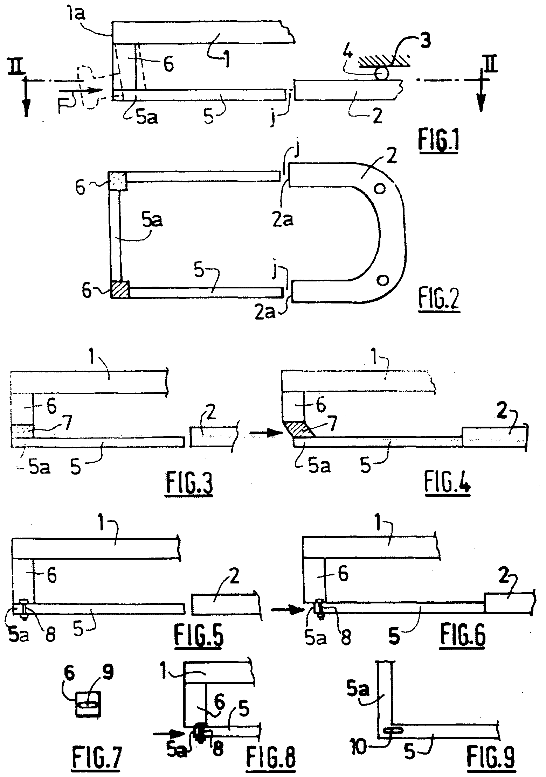

A cet effet, on connaît des véhicules automobiles dont l'avant présente la structure représentée schématiquement sur les figures 1 et 2.

Cette structure connue comprend deux longerons espacés 1 et un berceau 2 relié à la carrosserie 3 du véhicule par des blocs élastiques 4 de filtration. Le berceau 2 s'étend à une certaine distance en arrière de l'extrémité avant la des deux longerons 1 et dans un plan situé en dessous de ces derniers. Par ailleurs, un arceau de protection 5 contre les chocs s'étend sous les deux longerons 1 entre leurs extrémités avant la et l'extrémité avant 2a du berceau 2. Un jeu j est compris entre l'extrémité arrière de l'arceau 5 et l'extrémité avant 2a du berceau 2. Les extrémités avant la des longerons 1 sont reliées chacune à la partie avant 5a de l'arceau 5 par un élément rigide vertical 6, désigné par les spécialistes par « pendeloque ».

La structure avant représentée sur les figures 1 et 2 est en outre protégée par un bouclier (non représenté) en matière plastique.

Le jeu j compris entre l'arceau de protection 5 et le berceau 2 est de l'ordre de 9 mm pour conférer au berceau 2 une certaine mobilité grâce aux liaisons réalisées par des blocs élastiques 4 appelés couramment silentblocs.

Lors d'un choc appliqué sur l'avant de la structure dans le sens de la flèche F, l'arceau de protection 5 se déplace vers le berceau 2. Lorsque le choc se produit à une certaine vitesse, par exemple de l'ordre de 16 km/h, les éléments rigides verticaux 6 se déforment (voir position en pointillés sur la figure 1) au-delà de la limite élastique du matériau et doivent, de ce fait, être remplacés, ce qui implique une réparation relativement coûteuse.

Le but de la présente invention est de créer une structure avant de véhicule du type décrit ci-dessus qui soit capable de supporter des chocs à des vitesses pouvant atteindre par exemple 16 km/h sans qu'il soit nécessaire de réparer les éléments rigides verticaux ci-dessus.

Suivant l'invention, cette structure avant de véhicule automobile est caractérisée en ce que chacun desdits éléments rigides verticaux est relié audit arceau de protection par des moyens permettant un certain déplacement de cet arceau de protection vers ledit berceau, sous l'effet d'un choc appliqué sur l'avant de l'arceau, sans déformer les éléments rigides verticaux.

Le choc ci-dessus correspond à celui réalisé lors d'un impact lorsque le véhicule circule à une vitesse au plus égale à 16 km/h.

Selon l'une des versions de l'invention, lesdits moyens sont constitués par une pièce de liaison comprise, entre chacun desdits éléments rigides et l'arceau de protection, réalisée dans une matière pouvant se déformer lors dudit choc.

Selon une deuxième version de l'invention, lesdits moyens sont constitués par une pièce de liaison pouvant se rompre lors dudit choc.

Dans une troisième version de l'invention, lesdits moyens sont constitués par un organe de liaison appliquant avec friction l'extrémité d'un élément rigide sur la surface adjacente de l'arceau, cette friction étant calibrée pour permettre un glissement relatif entre ladite extrémité et ladite surface lors dudit choc.

Dans cette version, ledit organe de liaison est constitué par une vis sur laquelle est vissé un écrou, la force de serrage de ce dernier définissant ladite friction calibrée, cette vis étant engagée dans un trou oblong pratiqué soit dans l'extrémité de l'élément rigide, soit dans ladite surface adjacente de l'arceau, ce trou oblong étant orienté dans la direction du déplacement souhaité de l'arceau de protection vers le berceau.

En variante, ledit organe de liaison est constitué par une vis sur laquelle est vissé un écrou, cette vis étant engagée dans un trou pratiqué dans l'arceau, et les caractéristiques du matériau formant l'arceau définissent ladite friction calibrée, la vis provoquant un arrachement de matière de l'arceau sous l'effet du choc.

D'autres particularités et avantages de l'invention apparaîtront encore dans la description ci-après.

Aux dessins annexés, donnés à titre d'exemples non limitatifs :
- la figure 1 est une vue schématique de côté de la structure avant connue d'un véhicule automobile,
- la figure 2 est une vue en coupe selon le plan **II-II** de la figure 1,
- la figure 3 est une vue analogue à la figure 1 montrant une première version de l'invention,
- la figure 4 est une vue analogue à la figure 3 montrant l'effet d'un choc appliqué sur l'avant de la structure,
- la figure 5 est une vue analogue à la figure 3 montrant une seconde version de l'invention,
- la figure 6 est une vue analogue à la figure 5 montrant l'effet d'un choc appliqué sur l'avant de la structure,
- la figure 7 est une vue en plan d'un trou oblong existant dans la liaison avec glissement de la version représentée sur les figures 5 et 6.
- la figure 8 est une vue de côté partielle d'un autre mode de réalisation,
- la figure 9 est une vue de dessous de l'arceau de la structure selon la figure 8, montrant le trou formé dans le métal.

Les structures selon l'invention représentées sur les figures 3 à 6 diffèrent de celle des figures 1 et 2 par le fait que chacun des éléments rigides verticaux 6 est relié à l'arceau de protection 5 par des moyens permettant un certain déplacement de cet arceau de protection 5 vers le berceau 2, sous l'effet d'un choc appliqué sur l'avant 5a de l'arceau 5, sans déformer les éléments rigides verticaux 6. Ce choc est symbolisé par une flèche sur les figures 4 et 6.

Ledit choc correspond par exemple à celui réalisé lors de l'impact avec un piéton ou un autre véhicule lorsque le véhicule circule à une vitesse au plus égale à 16 km/h.

Dans le cas de la figure 3, les moyens précités sont constitués par une pièce de liaison 7 comprise entre chacun desdits éléments rigides 6 et l'avant 5a de l'arceau, et réalisée dans une matière pouvant se déformer lors dudit choc, comme montré sur la figure 4.

La pièce de liaison ci-dessus peut également être une pièce pouvant se rompre lors dudit choc, telle qu'une vis en acier présentant une zone de rupture ou une vis en matière plastique ou en une autre matière ayant une résistance inférieure à celle de l'acier.

La liaison ci-dessus peut également être constituée par un organe de liaison appliquant avec friction l'extrémité d'un élément rigide 6 sur la surface adjacente de l'arceau 5, cette friction étant calibrée pour permettre un glissement relatif entre ladite extrémité et ladite surface lors du choc, comme montré sur la figure 6.

Dans l'exemple de la figure 5, cet organe de liaison est constitué par une vis 8 sur laquelle est vissé un écrou, la force de serrage de ce dernier définissant ladite friction calibrée. Cette vis 8 est engagée dans un trou oblong 9 (voir figure 7) pratiqué soit dans l'extrémité de l'élément rigide 6, soit dans la surface adjacente de l'arceau 5. Ce trou oblong 9 est orienté dans la direction du déplacement souhaité de l'arceau de protection 5 vers le berceau 2.

Les dispositions décrites ci-dessus évitent toute déformation des éléments rigides 6 sous l'effet d'un choc tel que décrit précédemment. La réparation nécessaire à la suite d'un tel choc se réduit au remplacement de la pièce de liaison 7 déformée ou cassée.

Dans le cas de la structure selon la figure 5, il suffit de desserrer les vis 8, de remettre en place le berceau 5 puis de resserrer l'écrou de la vis 8.

Dans le cas de la structure représentée sur les figures 8 et 9, l'arceau 5, traversé par la vis 8 qui relie cet arceau à l'élément 6, est tel qu'il peut se déchirer sous l'effet d'un choc. Le matériau de l'arceau 5 est calibré pour que l'arrachement de matière ne se produise qu'au delà d'un certain effort suite à un choc, et par exemple pour des chocs au delà de 16km/h.

L'arrachement de matière, générant à titre d'exemple un trou allongé 10, tel que représenté sur la figure 9, permet le déplacement de l'arceau de protection 5, sans déformer les éléments rigides verticaux 6. Dans ce cas, l'arceau 5 devra être remplacé après le choc.

## Revendications

1. Structure de l'avant d'un véhicule automobile comprenant deux longerons espacés (1), un berceau (2) relié à la carrosserie (3) du véhicule par des blocs élastiques (4) de filtration et s'étendant à une certaine distance en arrière de l'extrémité avant (1a) des deux longerons (1) et dans un plan situé en dessous de ces derniers, un arceau de protection (5) contre les chocs s'étendant sous les deux longerons (1) entre leurs extrémités avant (1a) et l'extrémité avant (2a) dudit berceau (2), un jeu (j) étant compris entre l'extrémité arrière dudit arceau (5) et l'extrémité avant (2a) dudit berceau (2) et les extrémités avant (1a) des longerons (1) étant reliées chacune à la partie avant (5a) de l'arceau (5) par un élément rigide vertical (6), **caractérisée en ce que** chacun desdits éléments rigides verticaux (6) est relié audit arceau de protection (5) par des moyens permettant un certain déplacement de cet arceau de protection (5) vers ledit berceau (2), sous l'effet d'un choc appliqué sur l'avant (5a) de l'arceau (5), sans déformer les éléments rigides verticaux (6), lesdits moyens étant une pièce ou organe de liaison reliant l'extrémité inférieure des éléments verticaux (6) aux parties avant (5a) des arceaux.

2. Structure selon la revendication 1, **caractérisée en ce que** ledit choc correspond à celui réalisé lors d'un impact lorsque le véhicule circule à une vitesse au plus égale à 16 km/h.

3. Structure selon l'une des revendications 1 ou 2, **caractérisée en ce que** lesdits moyens sont constitués par une pièce de liaison (7) comprise, entre chacun desdits éléments rigides (6) et l'arceau (5), réalisée dans une matière pouvant se déformer lors dudit choc.

4. Structure selon l'une des revendications 1 ou 2, **caractérisée en ce que** lesdits moyens sont constitués par une pièce de liaison pouvant se rompre lors dudit choc.

5. Structure selon l'une des revendications 1 ou 2, **caractérisée en ce que** lesdits moyens sont constitués par un organe de liaison appliquant avec friction l'extrémité d'un élément rigide (6) sur la surface adjacente de l'arceau (5), cette friction étant calibrée pour permettre un glissement relatif entre ladite extrémité et ladite surface lors dudit choc.

6. Structure selon la revendication 5, **caractérisé en ce que** ledit organe de liaison est constitué par une vis (8) sur laquelle est vissé un écrou, la force de serrage de ce dernier définissant ladite friction calibrée, cette vis (8) étant engagée dans un trou oblong (9) pratiqué soit dans l'extrémité de l'élément rigide (6), soit dans ladite surface adjacente de l'arceau (5), ce trou oblong (9) étant orienté dans la direction du déplacement souhaité de l'arceau de protection (5) vers le berceau (2).

7. Structure selon la revendication 5, **caractérisée en ce que** ledit organe de liaison est constitué par une vis (8) sur laquelle est vissé un écrou, cette vis étant engagée dans un trou pratiqué dans l'arceau (5), et **en ce que** les caractéristiques du matériau formant l'arceau (5) définissent ladite friction calibrée, la vis (8) provoquant un arrachement de matière de l'arceau (5) sous l'effet du choc.

## Claims

1. Motor vehicle front structure comprising two spaced-apart spars (1), a cradle (2) connected to the bodywork (3) of the vehicle by elastic filtering blocks (4) and extending to a certain distance behind the front end (1a) of the two spars (1) and in a plane situated below the latter, a bow-shaped impact protection bar (5) extending under the two spars (1) between their front ends (1a) and the front end (2a) of said cradle (2), there being a gap (j) between the rear end of said bar (5) and the front end (2a) of said cradle (2) and the front ends (1a) of the spars (1) each being connected to the front part (5a) of the bar (5) by a vertical rigid element (6), **characterized in that** each of said vertical rigid elements (6) is connected to said protective bar (5) by means that allow this protective bar (5) a certain amount of travel toward said cradle (2) under the effect of an impact applied to the front (5a) of the bar (5), without deforming the vertical rigid elements (6), said means being a connecting piece or member connecting the lower end of the vertical elements (6) to the front parts of the bars (5a).

2. Structure according to Claim 1, **characterized in that** said impact corresponds to the shock of an impact when the vehicle is traveling at a speed of 16 km/h at most.

3. Structure according to either of Claims 1 and 2, **characterized in that** said means consist of a connecting piece (7) lying between each of said rigid elements (6) and the bar (5) and made of a material capable of deforming under the effect of said impact.

4. Structure according to either of Claims 1 and 2, **characterized in that** said means consist of a connecting piece that is able to break under the effect of said impact.

5. Structure according to either of Claims 1 and 2, **characterized in that** said means consist of a connecting member that applies the end of a rigid element (6) with friction against the adjacent surface of the bar (5), this friction being calibrated in such a way as to allow relative sliding between said end and said surface under said impact.

6. Structure according to Claim 5, **characterized in that** said connecting member consists of a screw (8) onto which a nut is screwed, the force with which the nut is tightened defining said calibrated friction, this screw (8) being engaged in an oblong hole (9) made either in the end of the rigid element (6) or in said adjacent surface of the bar (5), this oblong hole (9) being directed in the desired direction of travel of the protective bar (5) toward the cradle (2).

7. Structure according to Claim 5, **characterized in that** said connecting member consists of a screw (8) onto which a nut is screwed, this screw being engaged in a hole made in the bar (5), and **in that** the properties of the material of which the bar (5) is made define said calibrated friction, the screw (8) causing material to be pulled out of the bar (5) under the effect of the impact.

## Patentansprüche

1. Frontstruktur eines Kraftfahrzeugs, die zwei beabstandete Längsträger (1), eine Halterung (2), die mit der Karosserie (3) des Fahrzeugs über elastische Filterblöcke (4) verbunden ist und sich in einem bestimmten Abstand hinter dem vorderen Ende (1a) der zwei Längsträger (1) und in einer unter diesen befindlichen Ebene erstreckt, und einen Stoßschutzbügel (5) enthält, der sich unter den zwei Längsträgern (1) zwischen ihren vorderen Enden (1a) und dem vorderen Ende (2a) der Halterung (2) erstreckt, wobei ein Spiel (j) zwischen dem hinteren Ende des Bügels (5) und dem vorderen Ende (2a) der Halterung (2) enthalten ist, und die vorderen Ende (1a) der Längsträger (1) je mit dem vorderen Bereich (5a) des Bügels (5) durch ein steifes senkrechtes Element (6) verbunden sind, **dadurch gekennzeichnet, dass** jedes der steifen senkrechten Elemente (6) mit dem Schutzbügel (5) über Einrichtungen verbunden ist, die eine bestimmte Verschiebung dieses Schutzbügels (5) zur Halterung (2) unter der Wirkung eines Stoßes erlauben, der auf die Front (5a) des Bügels (5) ausgeübt wird, ohne die steifen senkrechten Elemente (6) zu verformen, wobei die Einrichtungen ein Verbindungsbauteil oder -organ sind, das das untere Ende der senkrechten Elemente (6) mit den vorderen Bereichen (5a) der Bügel verbindet.

2. Struktur nach Anspruch 1, **dadurch gekennzeichnet, dass** der Stoß demjenigen entspricht, der bei einem Aufprall entsteht, wenn das Fahrzeug mit einer Geschwindigkeit von höchstens gleich 16 km/h fährt.

3. Struktur nach einem der Ansprüche 1 oder 2, **dadurch gekennzeichnet, dass** die Einrichtungen aus einem Verbindungsbauteil (7) bestehen, das zwischen jedem der steifen Elemente (6) und dem Bügel (5) liegt, hergestellt aus einem Material, das sich bei dem Stoß verformen kann.

4. Struktur nach einem der Ansprüche 1 oder 2, **dadurch gekennzeichnet, dass** die Einrichtungen aus einem Verbindungsbauteil bestehen, das bei dem Stoß zerbrechen kann.

5. Struktur nach einem der Ansprüche 1 oder 2, **dadurch gekennzeichnet, dass** die Einrichtungen aus einem Verbindungsorgan bestehen, das mit Reibung das Ende eines steifen Elements (6) auf die benachbarte Fläche des Bügels (5) auflegt, wobei diese Reibung kalibriert ist, um ein relatives Gleiten zwischen dem Ende und der Fläche bei dem Stoß zu erlauben.

6. Struktur nach Anspruch 5, **dadurch gekennzeichnet, dass** das Verbindungsorgan aus einer Schraube (8) besteht, auf die eine Mutter geschraubt ist, wobei die Spannkraft dieser letzteren die kalibrierte Reibung definiert, wobei diese Schraube (8) in ein Langloch (9) eingeführt ist, das entweder in dem Ende des steifen Elements (6) oder in der benachbarten Fläche des Bügels (5) hergestellt ist, wobei dieses Langloch (9) in der Richtung der gewünschten Verschiebung des Schutzbügels (5) zur Halterung (2) ausgerichtet ist.

7. Struktur nach Anspruch 5, **dadurch gekennzeichnet, dass** das Verbindungsorgan aus einer Schraube (8) besteht, auf die eine Mutter geschraubt ist, wobei diese Schraube in ein Loch eingeführt ist, das im Bügel (5) hergestellt ist, und dass die Eigenschaften des den Bügel (5) bildenden Materials die kalibrierte Reibung definieren, wobei die Schraube (8) einen Materialabriss des Bügels (5) unter der Wirkung des Stoßes hervorruft.
